# FASCICULE DE BREVET EUROPEEN

(11) **EP 2 348 435 B1**
(45) Date de publication et mention de la délivrance du brevet: **27.05.2015**
(21) Numéro de dépôt: 10195120.0
(22) Date de dépôt: 15.12.2010
(51) Int. Cl.: G06F 21/00

(54) **Equipement et procédé de limitation du temps d'utilisation d'une console de jeux associée**
Vorrichtung und Verfahren für das Begrenzen der Verwendung-Zeit einer Spielkonsole
Apparatus and method for limiting the utilization time of a game console

(30) Priorité: 15.12.2009 FR 0906037
(43) Date de publication de la demande: 27.07.2011
(73) Titulaire: de Maleprade, Antoine, 78620 L'etang La Ville (FR)
(72) Inventeur: de Maleprade, Antoine, 78620 L'etang La Ville (FR)
(74) Mandataire: Vigand, Philippe

(56) Documents cités:
- WO-A1-2007/119125
- WO-A1-2009/053970
- WO-A2-2006/123318
- JP-A- 2003 190 555
- US-A1- 2010 207 664
- US-B1- 6 518 939
- US-B1- 6 777 828

## Description

La présente invention concerne un appareil permettant de limiter le temps d'utilisation d'une console de jeux vidéo. Les enfants passent de très longs moments sur ces consoles de jeux vidéo ce qui incite les parents à fixer des règles qui ne sont pas forcément respectées. Les dispositifs limiteur de temps permettent d'assister les parents en automatisant le contrôle du temps de jeu et en imposant le respect des règles définies.

### Etat de la technique

On connaît dans l'état de la technique un système de limitation de temps décrit dans le brevet américain US6777828. Ce système est constitué par un boîtier comprenant une entrée et une sortie d'alimentation ce qui permet de pouvoir couper cette alimentation au bout d'un temps défini à partir d'un afficheur et de touches alphanumériques. Cette solution n'est pas satisfaisante, car elle provoque l'interruption de l'alimentation de l'équipement contrôlé, lorsque le temps d'utilisation est atteint. Lorsque l'équipement contrôlé comprend des mémoires vives, la coupure de l'alimentation provoque des perturbations graves, notamment la perte des données enregistrées dans la mémoire vive. Elle peut aussi provoquer une altération du programme, en partie enregistré en mémoire vive et non sauvegardé lors de la coupure de l'alimentation. Un autre inconvénient des solutions de l'art antérieur est la complexité de l'installation, qui impose de débrancher l'équipement, de modifier les circuits d'alimentation. Enfin, ces solutions présentent l'inconvénient de pouvoir être facilement inhibées.

### Solution apportée par l'invention

Le but de l'invention est de remédier aux inconvénients des solutions connues dans l'art antérieur, en proposant un système de contrôle actif simple à installer, et permettant d'alerter l'utilisateur de la fin du temps d'utilisation imparti, tout en lui permettant d'assurer les sauvegardes et interruptions normales et sécurisées de l'équipement contrôlé. A cet effet, l'invention concerne selon son acception la plus générale un procédé de gestion du temps d'utilisation d'une console de jeux vidéo **caractérisé en ce qu'il** réalise une première étape de comparaison de données entre un temps autorisé pour l'utilisation de ladite console et un temps effectivement écoulé depuis le début de son utilisation sans réinitialisation dudit compteur, puis une seconde étape d'alerte visuelle ou sonore ou tactile de l'utilisateur d'une durée prédéterminée précédent une étape d'extinction de ladite console si le résultat de la première étape indique un dépassement du temps d'utilisation autorisé. L'invention concerne également un équipement de limitation temporelle de l'usage d'un équipement, notamment d'une console de jeu, comprenant un circuit de temporisation recevant en entrée un signal d'activité de la console de jeu contrôlée, ledit signal déclenchant le décompte de temps, le circuit commandant un moyen d'alarme lorsqu'un premier temps prédéterminé est décompté, et commandant un signal d'extinction de la console contrôlée à l'issue d'un second temps prédéterminé. Ce dispositif permet en effet de capter et de mesurer l'utilisation de la console de jeux et d'en empêcher la mise en route ou d'en forcer l'extinction. Il va donc vérifier continuellement que la console de jeux n'a pas été mise en route. Une fois le démarrage de la console pris en compte, l'appareil déclenche un compte à rebours qui va être mis en pause si la console est de nouveau éteinte. Le temps de jeu va être réinitialisé automatiquement après chaque période donnée. Une fois la fin du compte à rebours atteinte, l'appareil va signaler au joueur qu'il a fini son temps de jeu puis décompter un temps de réserve pour lui donner le temps de sauvegarder sa partie et d'éteindre lui-même la console. Si la console de jeux est allumée alors que le temps est terminé, l'appareil éteint la console de jeux.

Avantageusement, le procédé force la procédure d'extinction normale de ladite console si une permission n'a pas été enregistrée au préalable.

Avantageusement, la procédure d'extinction normale comporte une étape de sauvegarde de la partie en cours avant l'étape d'extinction de la console. Ainsi, on évite les pertes de données et/ou les risques de détériorations du programme, car le procédé respecte le protocole préconisé par les constructeurs de consoles de jeux vidéo pour une extinction normale avec une sauvegarde automatique.

### Exemple de réalisation

La présente invention sera mieux comprise à la lecture de la description qui suit d'un exemple non limitatif de réalisation, où :
la figure 1 représente une vue de l'équipement de contrôle utilisant la manette de la console associé à une console de jeu.
la figure 2 en exemple de schéma pour le circuit de commande.
Les figures 3-1, 3-2, 3-3, 3-4 représentent le cycle de fonctionnement de l'équipement de limitation selon l'invention.
La figure 4 et la figure 5 représentent une possibilité de fabrication de ladite innovation vue de l'extérieur puis de l'intérieur
la figure 6 représente le schéma de principe d'un circuit de commande.

### Description détaillée

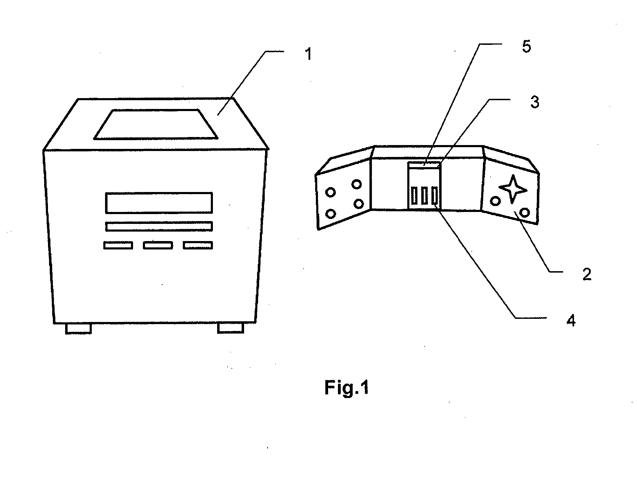

La figure 1 représente un exemple de réalisation d'un équipement, contrôlant une console de jeux (1), constitué par un boîtier (3) connecté à une manette de la console (2) possédant un avertisseur lumineux (4) et d'une prise sur secteur (5).

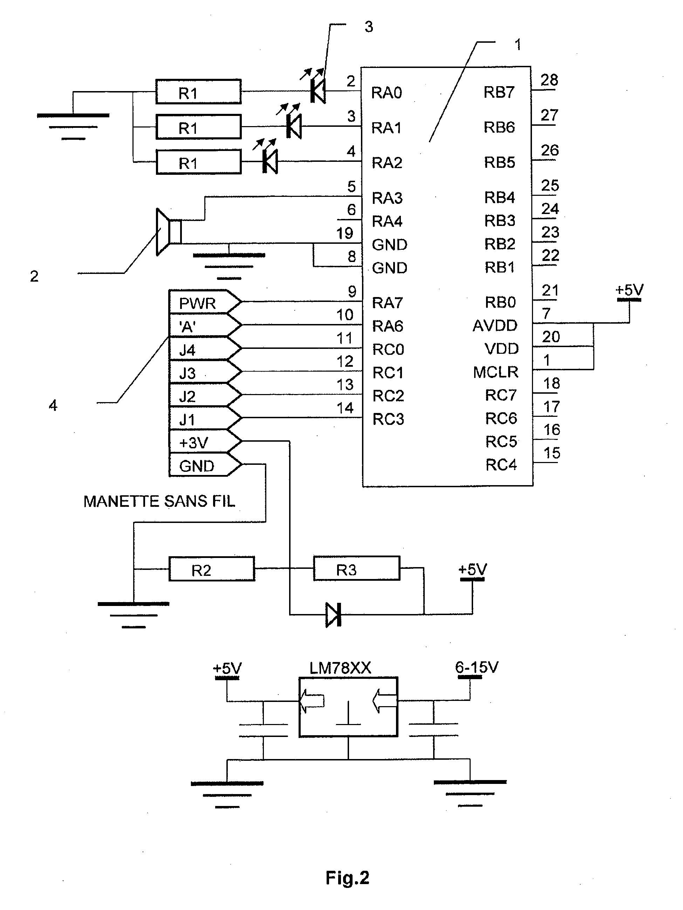

La figure 2 représente un exemple de circuit utilisant la manette de la console, comprenant un microcontrôleur (1), un avertisseur sonore (2), trois diodes lumineuses (3) (une verte, une orange et une rouge) et une connexion à la manette (4).

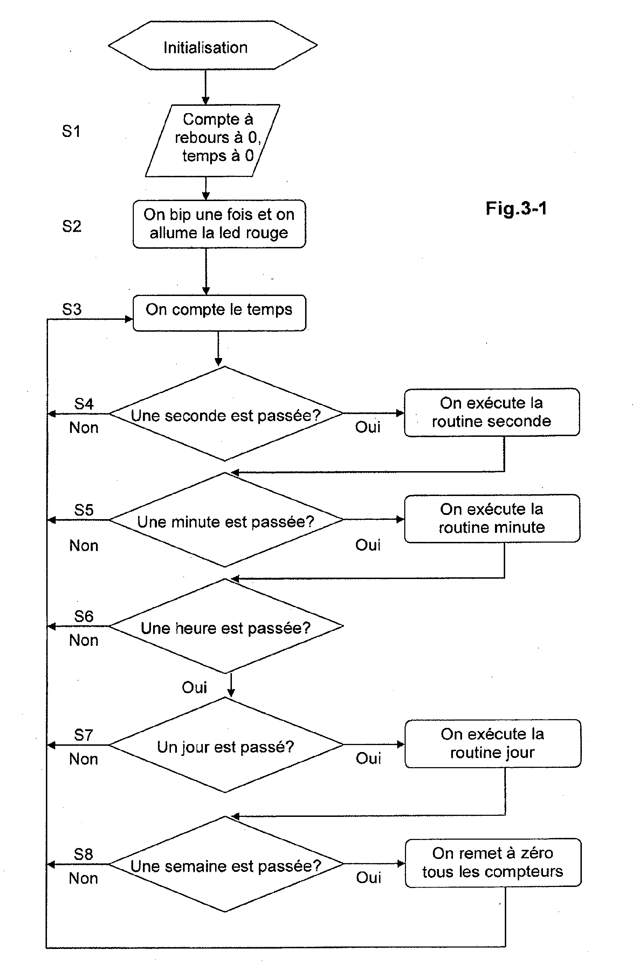

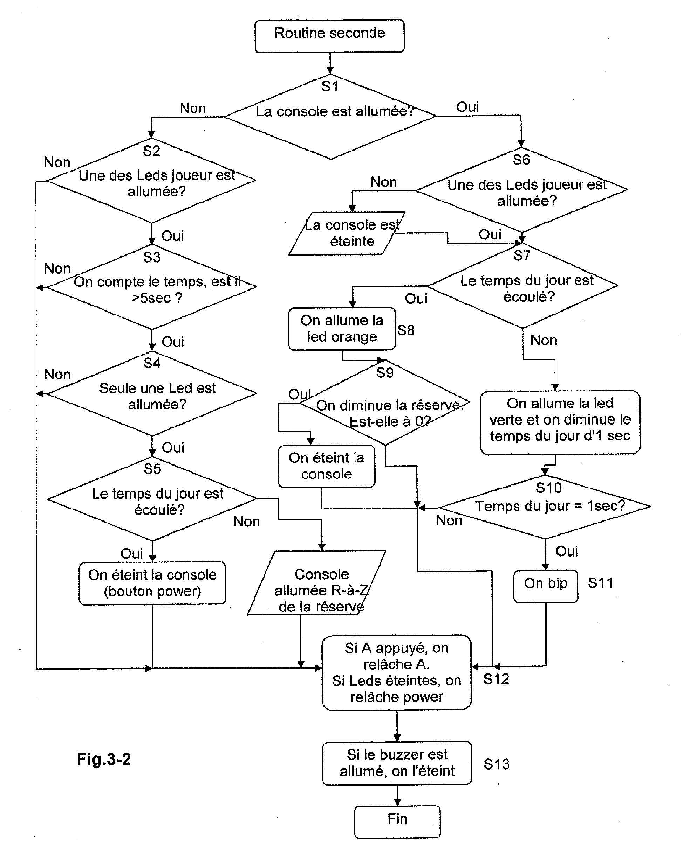

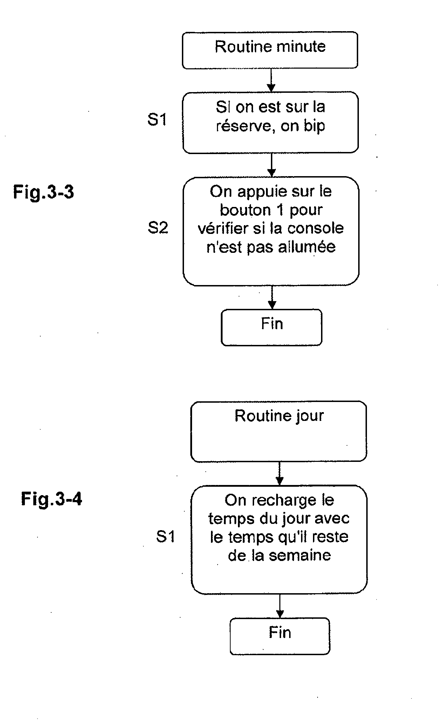

Les figures 3-1, 3-2, 3-3, 3-4 sont l'organigramme d'un programme pouvant être utilisé dans l'exemple précédant.

La figure 3-1 représente la routine générale :
Après l'initialisation, l'étape S1 met le compte à rebours à zéro et le temps à zéro.
A l'étape S2, on émet un bip sonore une fois et on allume la LED rouge.
A l'étape S3, on compte le temps.
A l'étape S4, on vérifie si une seconde est passée. Si oui, on exécute la routine seconde et on passe à l'étape S5, si non, on retourne à l'étape S3.
A l'étape S5, on vérifie si une minute est passée. Si oui, on exécute la routine minute et on passe à l'étape S6, si non, on retourne à l'étape S3.
A l'étape S6, on vérifie si une heure est passée. Si oui, on passe à l'étape S7, si non, on retourne à l'étape S3.
A l'étape S7, on vérifie si un jour est passé, si oui, on exécute la routine jour et on passe à l'étape S8, si non, on retourne à l'étape S3.
A l'étape S8, on vérifie si une semaine est passée. Si oui, on remet tous les compteurs à zéro, si non, on retourne à l'étape S3.

La figure 3-2 représente la routine seconde :
A l'étape S1, on vérifie si la console est allumée. Si oui, on passe à l'étape S6, si non, on passe à l'étape S2.
A l'étape S2, on vérifie si une des LED joueurs est allumée. Si oui, on passe à l'étape S3, si non, on passe à l'étape S12.
A l'étape S3, on compte le temps et on vérifie s'il est supérieur à 5 secondes. Si oui, on passe à l'étape S4, si non, on passe à l'étape S12.
A l'étape S4, on vérifie si une seule LED est allumée. Si oui, on passe à l'étape S5, si non, on passe à l'étape S12.
A l'étape S5, on vérifie si le temps du jour est écoulé. Si oui, on éteint le console et on passe à l'étape S12, si non, la console est allumée et on remet à zéro la réserve, puis on passe à l'étape S12.
A l'étape S6, on vérifie si une des LED joueurs est allumée. Si oui, on passe à l'étape S7, si non, la console est éteinte.
A l'étape S7, on vérifie si le temps du joueur est écoulé. Si oui, on allume la LED orange (étape S8) et on passe à l'étape S9, si non, on allume la LED verte et on diminue le temps du jour d'une seconde et on passe à l'étape S10.
A l'étape S9, on diminue la réserve et on vérifie si elle est à zéro. Si oui, on éteint la console, si non, on passe à l'étape S12.
A l'étape S10, on vérifie si le temps du jour est égal à une seconde. Si oui, on émet un bip sonore (étape S11) et on passe à l'étape S12, si non, on passe à l'étape S12.
A l'étape S12, si A est appuyé, on relâche A, et si les LEDs sont éteintes, on relâche le signal power.
A l'étape S13, si le buzzer est allumé, on l'éteint.

La figure 3-3 représente la routine minute :
A l'étape S1, si on est sur la réserve, on émet un bip sonore.
A l'étape S2, on appuie sur le bouton A pour vérifier si la console n'est pas allumée.

La figure 3-4 représente la routine jour :
A l'étape S1, on recharge le temps du jour avec le temps qu'il reste de la semaine.

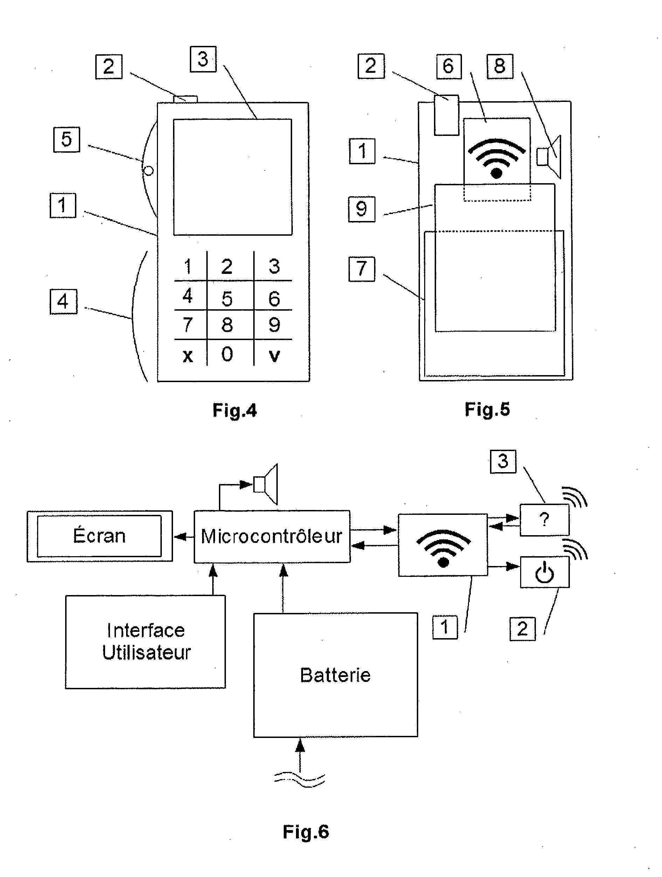

La figure 4 représente une possibilité de réalisation, vue de l'extérieur, constituée d'un boîtier solide et hermétique (1), d'un connexion secteur (2), d'un écran (3), d'un clavier digital (4) et d'une fixation solide (5).

La figure 5 représente une possibilité de réalisation, vue de l'intérieur, constituée d'un boitier solide et hermétique (1), d'une connexion secteur (2), d'un moyen de communication sans-fil (6), d'un accumulateur (7), d'un avertisseur sonore (8), et d'un circuit électronique (9).

La figure 6 représente le schéma de principe d'un circuit de commande, dont un module de communication sans fil, compatible avec la console (1), ayant la possibilité d'interroger la console pour connaître son état (2) ainsi que d'envoyer un signal correspondant au lancement de la procédure de mise hors tension.

L'appareil va pouvoir simuler une manette de jeux sans fil de la console et y tenter de se connecter à intervalles réguliers, par exemple toutes les 60 secondes, et dans le cas où il peut s'y connecter, va prendre en compte la mise en route de la console de jeux. L'appareil peut inclure une horloge interne pour la réinitialisation d'un temps journalier ou bien hebdomadaire. Quand la mise en route de la console est prise en compte, le temps est décompté et mis en pause lorsque l'appareil se déconnecte de la console lors d'une extinction de celle-ci. Lorsque le temps est écoulé, l'appareil peut d'abord émettre une alerte sonore puis décompter un temps de "réserve" pour permettre à l'utilisateur de sauvegarder sa partie et d'éteindre correctement la console. Si tel n'est pas le cas, l'appareil va forcer l'extinction et, pour ce faire, envoyer un signal correspondant à la touche de mise sous tension de la manette de jeu. Si la console est allumée alors que le temps de jeu est déjà entièrement écoulé, l'appareil va aussitôt en forcer l'extinction pour interdire l'accès à la console de jeu. Il pourra être intégré une interface gérant plusieurs temps séparés avec différents comptes utilisateurs ainsi qu'un compte administrateur permettant de paramétrer l'appareil. L'appareil pourra être construit dans un boitier résistant aux chocs avec une communication sans fil avec la console de jeux identique à celle de la manette de jeu. Il pourra aussi contenir une alarme et une batterie en cas de fraude ainsi qu'une possibilité de fixation solide : directement sur la console ou près de la console. L'invention permet donc la gestion de l'utilisation d'une console de jeux vidéo en réalisant une première étape de comparaison de données entre le temps autorisé pour l'utilisation de ladite console et le temps effectivement écoulé depuis le début de son utilisation sans réinitialisation dudit compteur, puis une seconde étape d'extinction de ladite console si le résultat de la première étape indique un dépassement du temps d'utilisation autorisé. L'invention permet aussi le forçage de l'extinction de ladite console si la permission n'a pas été enregistrée au préalable. Enfin, l'invention permet de garder en mémoire les données relatives à différents utilisateurs de la même console, ces données étant différentes en fonction des jours du calendrier et des heures de la journée.

## Revendications

1. Procédé de gestion du temps d'utilisation d'une console de jeux (1) vidéo réalisant une première étape (S5) de comparaison de données entre un temps autorisé pour l'utilisation de ladite console (1) et un temps effectivement écoulé compté par un compteur depuis le début de son utilisation sans réinitialisation dudit compteur, puis une seconde étape d'alerte visuelle (S8) ou sonore ou tactile de l'utilisateur d'une durée prédéterminée précédent une étape d'extinction (S9) de ladite console (1) si le résultat de la première étape indique un dépassement du temps d'utilisation autorisé, **caractérisé en ce que** le procédé détermine le temps effectivement écoulé depuis le début de l'utilisation de la console (1) en établissant une connexion avec la console (1), en simulant une manette de jeux sans fil.

2. Procédé de gestion de l'utilisation d'une console de jeux vidéo (1) selon la revendication 1, **caractérisé en ce qu'**il force la procédure d'extinction normale de ladite console (1) si une permission n'a pas été enregistrée au préalable.

3. Procédé de gestion de l'utilisation d'une console de jeux vidéo (1) selon la revendication 2, **caractérisé en ce que** la procédure d'extinction normale comporte une étape de sauvegarde de la partie en cours avant l'étape d'extinction de la console (1).

4. Procédé de gestion de l'utilisation d'une console de jeux vidéos (1) selon l'une des revendications 1 à 3, **caractérisé en ce qu'**il garde en mémoire des données relatives à différents utilisateurs de la même console (1) et **en ce que** ces données sont différentes en fonction des jours du calendrier et des heures de la journée.

5. Équipement de limitation temporelle de l'usage d'un équipement, comprenant une console de jeu (1), l'équipement comprenant un circuit de temporisation (9) recevant en entrée un signal d'activité de la console de jeu (1) contrôlée, ledit signal déclenchant le décompte de temps, le circuit commandant un moyen d'alarme (8) lorsqu'un premier temps prédéterminé est décompté, et commandant un signal d'extinction de la console (1) contrôlée à l'issue d'un second temps prédéterminé, **caractérisé en ce que** l'équipement détermine le temps effectivement écoulé depuis le début de l'utilisation de la console (1) en établissant une connexion avec la console (1), en simulant une manette de jeux sans fil.

6. Équipement selon la revendication 5, **caractérisé en ce qu'**il limite le temps d'utilisation d'une console de jeux vidéo (1) et **en ce qu'**il comprend des moyens aptes à forcer une sauvegarde automatique d'une partie en cours à l'issu du second temps prédéterminé avant de commander l'extinction de la console.

## Patentansprüche

1. Verfahren für die Verwaltung der Verwendungszeit einer Videospielkonsole (1), das einen ersten Vergleichsschritt (S5) von Daten einer genehmigten Zeit für die Verwendung der Konsole (1) mit einer seit dem Beginn ihrer Verwendung ohne Neuinitialisierung des Zählers tatsächlich vergangenen, von einem Zähler gemessenen Zeit und danach einen zweiten visuellen oder akustischen oder taktilen Warnschritt (S8) des Nutzers einer vorbestimmten Dauer vor einem Ausschaltschritt (S9) der Konsole (1), wenn das Ergebnis des ersten Schritts eine Überschreitung der genehmigten Verwendungszeit anzeigt, durchführt, **dadurch gekennzeichnet, dass** das Verfahren die seit dem Beginn der Verwendung der Konsole (1) tatsächlich vergangene Zeit durch Herstellung einer Verbindung mit der Konsole (1) durch Simulierung eines drahtlosen Joysticks bestimmt.

2. Verfahren für die Verwaltung der Verwendung einer Videospielkonsole (1) nach Anspruch 1, **dadurch gekennzeichnet, dass** es das normale Ausschaltverfahren der Konsole (1) erzwingt, wenn zuvor keine Genehmigung registriert wurde.

3. Verfahren für die Verwaltung der Verwendung einer Videospielkonsole (1) nach Anspruch 2, **dadurch gekennzeichnet, dass** das normale Ausschaltverfahren einen Speicherschritt der laufenden Partie vor dem Ausschaltschritt der Konsole (1) aufweist.

4. Verfahren für die Verwaltung der Verwendung einer Videospielkonsole (1) nach einem der Ansprüche 1 bis 3, **dadurch gekennzeichnet, dass** es Daten, die sich auf verschiedene Benutzer derselben Konsole (1) beziehen, im Speicher behält und dass diese Daten in Abhängigkeit von den Kalendertagen und den Uhrzeiten des Tages unterschiedlich sind.

5. Vorrichtung für die zeitliche Begrenzung der Verwendung einer Vorrichtung, die eine Spielkonsole (1) aufweist, wobei die Vorrichtung einen Zeitschaltkreis (9) umfasst, der am Eingang ein Aktivitätssignal der kontrollierten Spielkonsole (1) erhält, wobei das Signal die Zeitmessung auslöst, wobei der Kreis ein Alarmmittel (8) steuert, wenn eine erste vorbestimmte Zeit abgelaufen ist, und ein Ausschaltsignal der kontrollierten Konsole (1) nach Ablauf einer zweiten vorbestimmten Zeit steuert, **dadurch gekennzeichnet, dass** die Vorrichtung die seit dem Beginn der Verwendung der Konsole (1) tatsächlich vergangene Zeit durch Herstellung einer Verbindung mit der Konsole (1) durch Simulierung eines drahtlosen Joysticks bestimmt.

6. Vorrichtung nach Anspruch 5, **dadurch gekennzeichnet, dass** sie die Verwendungszeit einer Videospielkonsole (1) begrenzt und dass sie Mittel umfasst, die imstande sind, ein automatisches Speichern einer laufenden Partie nach Ablauf einer zweiten vorbestimmten Zeit zu erzwingen, bevor das Ausschalten der Konsole befohlen wird.

## Claims

1. A method for managing the time of use of a video game console (1) carrying out a first step (S5) for comparing data between a time allowed for the use of said console (1) and an actually elapsed time counted by a counter from the beginning of its use without resetting said counter, and then a second step for visually (S8) or acoustically or tactilely alerting the user of a predetermined duration preceding an extinction step (S9) of said console (1) if the result of the first step indicates that the allowed time of use has been exceeded, **characterized in that** the method determines the actually elapsed time between the beginning of the use of the console (1) by establishing a connection with the console (1), by simulating a wireless game joystick.

2. The method for managing the use of a video game console (1) according to claim 1, **characterized in that** it forces the normal extinction procedure of said console (1) if permission has not been recorded beforehand.

3. The method for managing the use of a video game console (1) according to claim 2, **characterized in that** the normal extinction procedure includes a step for saving the current game before the extinction step of the console (1).

4. The method for managing the use of a video game console (1) according to one of claims 1 to 3, **characterized in that** it keeps in memory data relating to various users of the same console (1) and **in that** these data are different depending on the days of the calendar and on the times of the day.

5. A piece of equipment for time limitation of the use of a piece of equipment comprising a game console (1), the piece of equipment comprising a timing circuit (9) receiving as an input an activity signal of the controlled game console (1), said signal triggering the time countdown, the circuit controlling an alarm means (8) when a first predetermined time is counted down, and controlling a signal for extinguishing the controlled console (1) at the end of a second predetermined time, **characterized in that** the piece of equipment determines the actually elapsed time between the beginning of the use of the console (1) by establishing a connection with the console (1), by simulating a wireless game joystick.

6. The piece of equipment according to claim 5, **characterized in that** it limits the time of use of a video game console (1) and **in that** it comprises means capable of forcing automatic saving of a current game at the end of the second predetermined time before controlling the extinction of the console.
